(19) Europäisches Patentamt
European Patent Office
Office européen des brevets

(11) EP 1 852 455 B1

(12) **EUROPÄISCHE PATENTSCHRIFT**

(45) Veröffentlichungstag und Bekanntmachung des Hinweises auf die Patenterteilung:
**31.12.2008 Patentblatt 2009/01**

(51) Int Cl.:
*C08G 77/26* (2006.01) *C08G 77/388* (2006.01)
*C08L 83/08* (2006.01)

(21) Anmeldenummer: **07106501.5**

(22) Anmeldetag: **19.04.2007**

(54) **Verfahren zur Herstellung von Urethangruppen aufweisenden Organosiliciumverbindungen**

Process for the preparation of organosilicon compounds having urethane groups

Procédé de préparation de composés d'organosilicium contenant des groupes d'uréthane

(84) Benannte Vertragsstaaten:
**BE DE FR GB NL**

(30) Priorität: **04.05.2006 DE 102006020819**
**04.05.2006 DE 102006020818**

(43) Veröffentlichungstag der Anmeldung:
**07.11.2007 Patentblatt 2007/45**

(73) Patentinhaber: **Wacker Chemie AG**
**81737 München (DE)**

(72) Erfinder: **Herzig, Christian Dr.**
**83329, Waging am See (DE)**

(74) Vertreter: **Deffner-Lehner, Maria et al**
**Wacker Chemie AG**
**Zentralbereich Patente, Marken und Lizenzen**
**Hanns-Seidel-Platz 4**
**81737 München (DE)**

(56) Entgegenhaltungen:
**EP-A2- 0 490 402** **US-B1- 6 379 751**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Herstellung von Urethangruppen aufweisenden Organosiliciumverbindungen und Urethangruppen aufweisende Organosiliciumverbindungen.

US 5,001,210 A offenbart die Herstellung eines Polyurethans durch ein zweistufiges Verfahren. Hierbei wird in einer ersten Stufe ein Diamins der Formel A-M-A, wobei A eine endständige Amingruppe und M den für die Einbringung in das Polyurethan gewünschten Rest, wie ein Kohlenwasserstoffrest oder ein Polymerrest, z.B. ein Dimethylpolysiloxanrest, bedeutet, mit einem cyclischen Carbonat zu einem Urethandiol umgesetzt. Der Polymeraufbau erfolgt dann durch Umsetzung des in der ersten Stufe erhaltenen Urethandiol mit einem Diisocyanat, wobei das gewünschte Polyurethan erhalten wird. Nachteilig ist, dass die beim Polymeraufbau erreichbare Kettenlänge durch Verunreinigungen und nicht exakte Stöchiometrie der Edukte limitiert wird.

In US 6,379,751 A sind Hydrophobiermittel für die Behandlung von Leder beschrieben, wobei die Hydrophobiermittel mit einer Ameisensäurefixierung die gleiche Wirksamkeit zeigen sollen wie mit der bisher üblichen Fixierung mit Chromsalzen. Die beschriebenen Hydrophobiermittel enthalten ein Carboxylgruppenhaltiges Polysiloxan, das hergestellt wird, indem ein Aminopolysiloxan mit einem Lacton oder einem cyclischen Carbonat umgesetzt wird und die bei der Umsetzung erhaltenen Hydroxyfunktionen im Polysiloxan mit einem Polycarbonsäure-Derivat zur Reaktion gebracht werden. Ein weiterer Aufbau zu hochmolekularen Polymeren wird nicht beschrieben.

US 5,174,813 und US 5,389,364 offenbaren Umsetzungsprodukte von linearen Aminopolysiloxanen mit Carbonaten oder Lactonen. Die Aminosiloxanderivate werden ohne weiteren Kondensationsprozess bei US 5,174,813 in Poliermittelformulierungen und bei US 5,389,364 in Haarpflegemitteln eingesetzt.

In US 5,686,547 ist ein Verfahren zur Herstellung von Siliconen mit funktionellen Hydroxycarbamat-Gruppen beschrieben, bei dem in einer Hydrosilylierungsreaktion Hydrogensiloxane an ungesättigte cyclische Carbonatester angelagert werden, wobei Silicone mit funktionellen Carbonat-Gruppen erhalten werden, die anschließend mit organischen Aminen, wie Dialkylaminen, umgesetzt werden. Aminopolysiloxane werden nicht eingesetzt.

Es bestand die Aufgabe, ein Verfahren zur Herstellung von Urethangruppen aufweisenden Organosiliciumverbindungen bereitzustellen, bei dem die Herstellung von hochmolekularen Polymere ohne Verwendung von Isocyanaten erfolgt, bei dem als Edukte eine Vielzahl von Aminopolysiloxanen mit seitenständigen Aminogruppen eingesetzt werden können, deren Kettenlänge und Funktionsdichte variabel sind, und bei dem die gewünschten Endprodukte und die gewünschten Kettenlängen der Endprodukte auf einfache Weise und variabel erhalten werden. Weiterhin bestand die Aufgabe Urethangruppen aufweisende Organosiliciumverbindungen, insbesondere hochmolekulare Polymere, bereitzustellen.

Gegenstand der Erfindung ist ein Verfahren zur Herstellung von Urethangruppen aufweisenden Organosiliciumverbindungen, indem in einer 1. Stufe aminofunktionelle Organosiliciumverbindungen (1), die pro Molekül mindestens eine Siloxaneinheit der allgemeinen Formel

$$AR_aSiO_{\frac{3-a}{2}} \qquad (I)$$

und pro Molekül mindestens zwei Siloxaneinheiten der allgemeinen Formel

$$XR_bSiO_{\frac{3-b}{2}} \qquad (II)$$

enthalten, wobei
R gleich oder verschieden ist und einen einwertigen, gegebenenfalls substituierten Kohlenwasserstoffrest mit 1 bis 18 Kohlenstoffatomen, vorzugsweise einen einwertigen Kohlenwasserstoffrest mit 1 bis 18 Kohlenstoffatomen bedeutet,
A einen Rest der allgemeinen Formel

$$-R^1(-NR^2-R^1)_z-NR^2-H \qquad (III),$$

bedeutet, wobei
$R^1$ einen zweiwertigen organischen Rest mit 1 bis 18 Kohlenstoffatomen, vorzugsweise einen zweiwertigen Kohlenwasserstoffrest mit 1 bis 18 Kohlenstoffatomen bedeutet,
$R^2$ ein Wasserstoffatom oder einen Kohlenwasserstoffrest mit 1 bis 18 Kohlenstoffatomen, vorzugsweise ein Wasserstoffatom bedeutet,
X eine kondensationsfähige Gruppe bedeutet,

a 0 oder 1, vorzugsweise 1 ist,
b 1 oder 2, vorzugsweise 2 ist,
z 0 oder eine ganze Zahl von 1 bis 10, vorzugsweise 0, 1 oder 2 ist,
mit organischen Carbonaten (2), die eine Gruppe der allgemeinen Formel

-O-C(=O)O- (IV)

enthalten, umgesetzt werden und
in einer 2. Stufe
die in der 1. Stufe erhaltenen kondensationsfähige Gruppen aufweisenden Umsetzungsprodukte aus (1) und (2) gegebenenfalls mit Silanen (3), die kondensationsfähige Gruppen aufweisen,
zu höhermolekularen, Urethangruppen aufweisenden Organosiliciumverbindungen kondensiert werden.

Bei dem erfindungsgemäßen Verfahren werden durch die Kondensation vorzugsweise Urethangruppen aufweisende Organosiliciumverbindungen erhalten, bei denen das Molekulargewicht $M_n$ vorzugsweise mindestens zwei Mal so groß, bevorzugt mindestens fünf Mal so groß, ist wie das Molekulargewicht $M_n$ der eingesetzten aminofunktionellen Organosiliciumverbindungen (1).

Beispiele für Kohlenwasserstoffreste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der $\alpha$-und der $\beta$-Phenylethylrest.

Beispiele für substituierte Kohlenwasserstoffreste R sind halogenierte Kohlenwasserstoffreste.

Beispiele für Reste $R^1$ sind Alkylenreste mit 1 bis 18 Kohlenstoffatomen.

Beispiele für Reste A sind
$-CH_2-NH_2$
$-CH(CH_3)-NH_2$
$-C(CH_3)_2-NH_2$
$-CH_2CH_2-NH_2$
$-CH_2CH_2CH_2-NH_2$
$-CH_2CH_2CH_2CH_2-NH_2$
$-CH_2CH_2CH(CH_3)-NH_2$
$-CH_2CH_2CH_2-NH-CH_2CH_2-NH_2$
$-CH_2CH_2CH_2-N(CH_3)-CH_2CH_2-NH_2$
$-CH_2CH_2CH_2[-NH-CH_2CH_2]_2-NH_2$ .
$-CH_2CH_2C(CH_3)_2CH_2-NH_2$

Die Organosiliciumverbindungen (1) enthalten neben den Siloxaneinheiten der Formel (I) und (II) vorzugsweise Siloxaneinheiten der Formel

$$R_cSiO_{\frac{4-c}{2}} \qquad (V)$$

wobei R die oben dafür angegebene Bedeutung hat und
c 1, 2 oder 3 bedeutet.
Als Organosiliciumverbindungen (1) werden vorzugsweise lineare oder weitgehend lineare Organopolysiloxane eingesetzt.

Die Organopolysiloxane (1) müssen mindestens zwei reaktive Gruppen X, bevorzugt am Kettenende, enthalten, die entweder selbst oder mit reaktiven Gruppen von Silanen (3) unter Ausbildung kovalenter Bindungen zur Kondensation zu höheren Molekularverbänden befähigt sind. Vorzugsweise sind dies Gruppen, die sich vom Siloxanylrest leicht abspalten lassen, wie Hydroxy-, Alkoxy-, Acyl- oder Oximgruppen, sowie auch Halogene, wobei Hydroxy- und Alkoxygruppen, wie Methoxy- und Ethoxygruppen, bevorzugt sind, und die Hydroxygruppe besonders bevorzugt ist. Bevorzugt bildet die Hydroxygruppe mindestens 50 Mol-% aller kondensationsfähiger Gruppen X der Organopolysiloxane (1), besonders bevorzugt mindestens 90 Mol-%.

Bevorzugt als Organosiliciumverbindungen (1) sind lineare Organopolysiloxane der allgemeinen Formel

$$XR_2SiO(SiR_2O)_1(SiRAO)_kSiR_2X \qquad (VI),$$

wobei A, R und X die oben dafür angegebene Bedeutung haben,
1 0 oder eine ganze Zahl von 1 bis 1 000, bevorzugt eine ganze Zahl von 10 bis 600 ist, und
k eine ganze Zahl von 5 bis 1 000, bevorzugt eine ganze Zahl von 10 bis 500, und besonders bevorzugt eine ganze Zahl von 50 bis 500 ist.

Im Rahmen dieser Erfindung soll Formel (VI) so verstanden werden, dass 1 Einheiten -($SiR_2O$)- und k Einheiten - (SiRAO) - in beliebiger Weise, beispielsweise als Block oder statistisch, im Organopolysiloxanmolekül verteilt sein können.

Es können aber auch weitgehend lineare Organopolysiloxane (1) eingesetzt werden, die neben den D-Einheiten SiRAO und $SiR_2O$ auch T-Einheiten $SiAO_{3/2}$ und/oder $SiRO_{3/2}$ enthalten können.

Die bei dem erfindungsgemäßen Verfahren eingesetzten Organosiliciumverbindungen (1) besitzen vorzugsweise eine durchschnittliche Viskosität von 50 bis 50 000 mPa.s bei 25°C, bevorzugt 100 bis 20 000 mPa.s bei 25°C und vorzugsweise ein durchschnittliches Molekulargewicht $M_n$ von 3 000 bis 80 000, bevorzugt 5 000 bis 50 000.

Die Organosiliciumverbindungen (1) enthalten primäre und/oder sekundäre Aminogruppen in titrierbaren Mengen von 0,01 bis ca. 8 mεqu./g, besonders bevorzugt im Bereich von 0,05 bis ca. 3 mεqu./g Organosiliciumverbindung (1).

Beispiele für Organopolysiloxane (1) sind Copolymerisate aus Aminopropylmethylsiloxan- und Dimethylsiloxaneinheiten, Aminopropylsiloxan- und Dimethylsiloxaneinheiten, Aminoethylaminopropylmethylsiloxan- und Dimethylsiloxaneinheiten, Aminoisobutylmethylsiloxan- und Dimethylsiloxaneinheiten sowie auch Terpolymere aus Aminopropylsiloxan-, Aminopropylmethylsiloxan- und Dimethylsiloxaneinheiten oder aus Aminopropylmethylsiloxan-, Aminoethylaminopropylsiloxan- und Dimethylsiloxaneinheiten.

Es kann eine Art von Organsiliciumverbindungen (1) oder mehrere Arten von Organsiliciumverbindungen (1) eingesetzt werden.

Bevorzugt werden als organische Carbonate (2) Cyclocarbonate der allgemeinen Formel

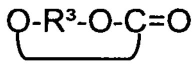 (VII),

wobei $R^3$ einen zweiwertigen Kohlenwasserstoffrest mit 1 bis 12 Kohlenstoffatomen, der gegebenenfalls durch mindestens eine Hydroxylgruppe substituiert ist, vorzugsweise einen zweiwertigen Kohlenwasserstoffrest mit 1 bis 6 Kohlenstoffatomen, der gegebenenfalls durch mindestens eine Hydroxylgruppe substituiert ist, bedeutet, eingesetzt.

Bevorzugt ist der Rest $R^3$ ein Ethylen-, Propylen- oder Hydroxymethylethylenrest.

Beispiele für organische Carbonate (2) sind Dimethylcarbonat, Diethylcarbonat, Ethylencarbonat, Propylencarbonat, Butylencarbonat und Glycerincarbonat. Diese Edukte können als Einzelstoffe, aber auch in Abmischung miteinander eingesetzt werden. Besonders bei Ethylencarbonat empfiehlt sich eine Abmischung mit einem flüssigen Carbonat, damit es nicht als Feststoff eingesetzt werden muss, wodurch sich die Handhabung erleichtert. Solche Gemische sind kommerziell erhältlich.

Die Carbonate (2) reagieren bevorzugt mit primären Aminofunktionen in Organosiliciumverbindungen (1). Die Stöchiometrie von Carbonat (2) zu primären Amin in (1) ist völlig unkritisch und kann je nach Syntheseziel in weiten Grenzen variieren. Aminüberschuss führt naturgemäß zu Produkten, die noch freie Amingruppen enthalten und protoniert werden können. Umgekehrt wird bei Carbonatüberschuss schnell ein kompletter Umsatz aller primären Aminofunktionen erhalten. Aus ökonomischen Gründen ist jedoch eine möglichst stöchiometrische Umsetzung mit einem Quotienten von Carbonat/-$NH_2$ von ca. 1,0 wünschenswert.
Bei dem erfindungsgemäßen Verfahren wird Carbonat (2) vorzugsweise in Mengen von 0,2 bis 2 Mol, bevorzugt 0,5 bis 1,2 Mol je Mol primäre und sekundäre Aminogruppe in Organosiliciumverbindung (1) eingesetzt.

Enthalten die verwendeten Organopolysiloxane (1) zusätzlich zu den primären Aminogruppen auch sekundäre Aminogruppen, so erhält man überwiegend basische Umsatzprodukte, da sich die Carbonate mit diesen nur unvollständig umsetzen, auch wenn sie in größerem Überschuss bezogen auf die $NH_2$-Gruppen eingesetzt werden.

Die erste Stufe des erfindungsgemäßen Verfahren, die Umsetzung von (1) mit (2) wird bei einer Temperatur von vorzugsweise 10 bis 160°C durchgeführt. Wird das erfindungsgemäße Verfahren diskontinuierlich in einem Batchprozess durchgeführt, beträgt die Temperatur bevorzugt 25 bis 80°C. Wird das erfindungsgemäße Verfahren kontinuierlich durchgeführt beträgt die Temperatur bevorzugt 100 bis 160°C. Es können aber auch höhere oder niedrigere Temperaturen eingesetzt werden.
Das erfindungsgemäße Verfahren wird vorzugsweise beim Druck der umgebenden Atmosphäre, also etwa bei 1020 hPa, durchgeführt, es kann aber auch bei höheren oder niedrigeren Drücken durchgeführt werden.

Die Herstellung der erfindungsgemäßen Organosiliciumverbindungen kann in organischen Lösungsmitteln erfolgen, insbesondere bei hohen Viskositäten der erfindungsgemäßen Organosiliciumverbindungen kann dies vorteilhaft sein. Beispiele für Lösungsmittel sind gesättigte Kohlenwasserstoffe, wie n-Pentan, n-Hexan, n-Heptan und n-Octan,

und deren verzweigte Isomeren, Benzine, z. B. Alkangemische mit einem Siedebereich von 80°C bis 140°C bei 1020 hPa, ungesättigte Kohlenwasserstoffe wie 1-Hexen, 1-Hepten, 1-Octen und 1-Decen, aromatische Kohlenwasserstoffe wie Benzol, Toluol und Xylole, halogenierte Alkane mit 1 bis 6 Kohlenstoffatom(en), wie Methylenchlorid, Trichlorethylen und Perchlorethylen, Ether, wie Di-n-butyl-ether, Ester, wie Ethylacetat, Ketone, wie Methylethylketon und Cyclohexanon, Alkohole, wie Methanol, Ethanol, n-Propanol und iso-Propanol, und niedermolekulare lineare und cyclische Organopolysiloxane.

Die Kondensation der Umsetzungsprodukte aus (1) und (2) zu den erfindungsgemäßen Organosiliciumverbindungen (4) kann gemäß den bislang bekannten Verfahren erfolgen. Enthält die Organosiliciumverbindung (1) als reaktive Gruppe X die Hydroxygruppe oder ein Gemisch aus Hydroxy- und Alkoxygruppen, so kann eine Kondensation rein thermisch erfolgen, gegebenenfalls katalysiert durch Säuren oder Basen. Beispiele für Säuren sind aliphatische oder aromatische Sulfonsäuren, Fluorcarbonsäuren oder Schwefelsäure und Beispiele für Basen sind Kaliumhydroxid, Cäsiumhydroxid oder Natriummethylat. Enthält die Organosiliciumverbindung (1) ausschließlich leicht abspaltbare Gruppen wie Alkoxy-, Acyl-, Oxim- oder Halogengruppen und keine Hydroxygruppen, wird vorzugsweise durch Zugabe von Wasser erst ein Teil dieser Gruppen hydrolysiert und dann erst der Kondensationsprozess gestartet.

Wasser kann dabei in Mengen von vorzugsweise 1 bis 10 Mol je Mol abspaltbare Gruppe X in der Organosiliciumverbindung (1) eingesetzt werden.

Bevorzugt ist allerdings, dass mindestens 50 Mol-% der reaktiven Gruppen X in der Organosiliciumverbindung (1) aus Hydroxygruppen bestehen. Besonders bevorzugt ist die Kondensation von ausschließlich Si-OH-Endgruppen unter Bildung einer Siloxanverknüpfung und Wasser.

Bei der Kondensation in der 2. Stufe des erfindungsgemäßen Verfahrens können auch Silane (3), vorzugsweise Alkoxysilane mitverwendet werden. Sie wirken als Kondensationshilfsstoffe und reagieren mit den bevorzugten Siloxandiolen, den endständige Hydroxygruppen aufweisenden Organopolysiloxane (1) der Formel (VI), unter Bildung von Alkoholen und werden selbst zwischen die Siloxanketten eingebaut werden.

Bevorzugt werden hierzu die besonders reaktiven $\alpha$-Silane eingesetzt, die Gruppierung Si-$CH_2$-Heteroatom enthalten.

Bevorzugt werden daher als Silane (3) $\alpha$-Silane der allgemeinen Formel

$$WR_eSi(OR^4)_{3-e} \qquad (VIII),$$

wobei W einen einwertigen Reste der Formel -$CH_2$-Y bedeutet,

Y ein monofunktioneller Rest aus der Gruppe der Halogene, der monosubstituierten Atome O und S und der substituierten Atome N und P bedeutet,

R die oben dafür angegebene Bedeutung hat,

$R^4$ einen Alkylrest mit 1 bis 8 Kohlenstoffatomen je Rest bedeutet,

e 0 oder 1, bevorzugt 1 ist,

eingesetzt.

Als Silane (3) sind die $\alpha$-Aminosilane besonders bevorzugt. Bevorzugt ist W daher ein Rest der Formel $-CH_2NHR^5$, $-CH_2NR^5_2$ oder

$$-CH_2NHR^5, \quad -CH_2NR^5_2 \text{ oder } -CH_2NR^6 ,$$

wobei $R^5$ einen einwertigen, gegebenenfalls N- und/oder O-Atome enthaltenden Kohlenwasserstoffrest mit 1 bis 18 Kohlenstoffatomen und $R^6$ einen zweiwertigen gegebenenfalls N-und/oder O-Atome enthaltenden Kohlenwasserstoffrest mit 3 bis 12 Kohlenstoffatomen bedeuten.

Bevorzugt ist die Alkoxygruppe $-OR^4$ in den $\alpha$-Silanen der Formel (VIII) ein Methoxy- oder Ethoxyrest.

Bevorzugte Beispiele für Reste W sind Aminomethyl, Methylaminomethyl, Dimethylaminomethyl, Diethylaminomethyl, Dibutylaminomethyl, Cyclohexylaminomethyl, Anilinomethyl, 3-Dimethylaminopropyl-aminomethyl, Bis(3-dimethylaminopropyl)aminomethyl, N-Morpholinomethyl, Piperazinomethyl, Piperidinomethyl, Diethylphosphinomethyl und Dibutylphosphinomethyl.

Zur Bildung kettenförmiger Organopolysiloxanverbindungen (4) werden in der zweiten Stufe des erfindungsgemäßen Verfahrens vorzugsweise als Silane (3) Dialkoxysilane verwendet, die zu einem linearen Polymeraufbau führen. Trialkoxysilane führen naturgemäß zu Verzweigungen bei der Kondensation und sollten, falls überhaupt, nur in geringer Menge eingesetzt werden, sofern die Herstellung unvernetzter Produkte (3) beabsichtigt ist. Auch der Einsatz von Monoalkoxysilanen zur Endstopperung der Polymerketten wäre möglich, aber beim Aufbau größerer Polymermoleküle eher kontraproduktiv, da dadurch Kettenabbrüche erzeugt werden.

In der zweiten Stufe des erfindungsgemäßen Verfahren werden Silane (3) vorzugsweise in Mengen von 0,5 bis 2,0 Mol, bevorzugt 0,9 bis 1,5 Mol Alkoxygruppe $-OR^4$ in (3) je Mol Gruppe X, bevorzugt Hydroxygruppe, im in der

ersten Stufe erhaltenen Umsetzungsprodukt aus (1) und (2) eingesetzt.

Zur Erzielung möglichst hoher Molekulargewichte wird vorzugsweise ein Verhältnis von Alkoxygruppe in (3) zu Hydroxygruppe im Umsetzungsprodukt aus (1) und (2) von ca. 1 eingehalten; im Einzelfall aber davon abhängig, welche Alkoxyverluste gegebenenfalls durch Nebenreaktionen aufgrund von Verunreinigungen, wie Wasser, auftreten. Wenn in der ersten Stufe des erfindungsgemäßen Verfahrens zur Umsetzung mit (2) bereits Organopolysiloxane (1) mit höheren Molekulargewichten von ca. 10 000 bis 50 000 Dalton eingesetzt werden, können Molekulargewichte der Endprodukte von über 100 000 Dalton in wenigen Kondensationsschritten erreicht werden.

Durch die Kondensation werden höhermolekulare Urethangruppen aufweisende Organosiliciumverbindungen mit einem Molekulargewichts $M_n$ erhalten, das vorzugsweise mindestens zwei Mal, bevorzugt mindestens fünf Mal so groß ist wie das Molekulargewichts $M_n$ der eingesetzten Organosiliciumverbindung (1) .

Durch die Kondensation werden höhermolekulare Urethangruppen aufweisende Organosiliciumverbindungen mit einem Molekulargewichts $M_n$ erhalten, das vorzugsweise 2 bis 100 Mal, bevorzugt 5 bis 50 Mal, so groß ist wie das Molekulargewichts $M_n$ der eingesetzten Organosiliciumverbindung (1).

Im Fall einer streng linearen Kondensation, also wenn das Umsetzungsprodukt aus (1) und (2) pro Molekül genau zwei Gruppen X (gleich Hydroxy) enthält und das Silan (3) eines der Formel (VIII) mit e=1 ist, dann hängt das durchschnittlich erzielte Molekulargewicht $M_n$ der erfindungsgemäßen Organosiliciumverbindungen bei verlustfreier Fahrweise der Kondensation nur noch von der Stöchiometrie der Gruppen X zu $OR^4$ und der Vollständigkeit der Kondensationsreaktion selbst ab. Läuft diese zu 100% vollständig ab, was mit Silanen der Formel (VIII) möglich ist, und wird ein Einsatzverhältnis $OH/OR^4$=2,0 gewählt, erhält man ein erfindungsgemäßes Produkt, das ein $M_n$ des doppelten vom Umsetzungsprodukt aus (1) und (2), plus dem Gewicht des Silans der Formel (VIII), minus zwei mal dem Gewicht des Spaltprodukts $R^4OH$ hat. Da die Gewichte von Silan (3) sowie $R^4OH$ klein gegenüber dem des Umsetzungsproduktes aus (1) und (2) sind, ist also ungefähr eine Molekulargewichts-verdoppelung erhalten worden. Sinngemäß wird bei einem Einsatzverhältnis $OH/OR^4$ von 10:9 etwa eine Verzehnfachung, bei $OH/OR^4$ von 50:49 etwa eine Verfünfzigfachung des $M_n$ des Umsetzungsproduktes aus (1) und (2) erhalten.

Im Fall von e=0 erhält man verzweigte Kondensationsprodukte. Diese sind bei hohem Verhältnis von $OH/OR^4$ durchschnittlich nur schwach verzweigt, bei geringerem OH-Überschuss stärker verzweigt. Geht das Verhältnis $OH/OR^4$ gegen 1 können keine fließfähigen Produkte mehr erhalten werden: Das erfindungsgemäße Organosiloxan liegt dann als Gel vor und kann Elastomereigenschaften aufweisen. Für solche Produkte lässt sich kein sinnvolles Molekulargewicht $M_n$ mehr angeben, da dies extrem hohe Werte annehmen würde.

Beim erfindungsgemäßen Verfahrens wird die Kondensation vorzugsweise bei einer Temperatur von 10 bis 150°C, bevorzugt von 25 bis 120°C durchgeführt.

Die Kondensation wird vorzugsweise beim Druck der umgebenden Atmosphäre, also etwa bei 1020 hPa, durchgeführt, es kann aber auch bei höheren oder niedrigeren Drücken durchgeführt werden.

In einer speziellen Ausführung des erfindungsgemäßen Verfahrens ist es auch möglich, die Umsetzung mit der Komponente (2) und die Kondensation gleichzeitig in einem Schritt auszuführen.

Das erfindungsgemäße Verfahren kann diskontinuierlich, halbkontinuierlich oder kontinuierlich durchgeführt werden.

Das erfindungsgemäße Verfahren hat den Vorteil, dass die Funktionalisierung der Polymere mit Urethangruppen und der Kettenaufbau der Polymere entkoppelt ist, was das Verfahren sehr flexibel macht. Je nach Aminofunktionsdichte der eingesetzten Organopolysiloxane (1) kann die Funktionalisierung zu Urethangruppen, insbesondere mit den kommerziell erhältlichen Cyclocarbonaten (2), bereits in der 1. Stufe des Verfahrens schon hoch gewählt werden und durch die anschließende Kondensation kann die gewünschte Kettenlänge variabel und einfach erhalten werden. Das erfindungsgemäße Verfahren kommt ohne Isocyanat aus, was ein ökologischer Vorteil ist.

Bei dem erfindungsgemäßen Verfahren werden als Urethangruppen aufweisende Organosiliciumverbindungen vorzugsweise Urethangruppen aufweisende Organopolysiloxane erhalten. Sie können lineare, verzweigte, cyclische oder vernetzte Strukturen aufweisen. Bevorzugt sind lineare oder weitgehend lineare Organopolysiloxane (4).

Die erfindungsgemäßen Urethangruppen aufweisenden Organosiliciumverbindungen sind hochmolekulare Produkte und weisen vorzugsweise ein durchschnittliches Molekulargewicht $M_n$ von 10 000 bis 1 000 000, bevorzugt 50 000 bis 600 000 und besonders bevorzugt 100 000 bis 300 000 auf.

Bei dem erfindungsgemäßen Verfahren werden vorzugsweise Urethangruppen aufweisende Organosiliciumverbindungen (4) erhalten, die durchschnittlich mindestens 5 Siloxaneinheiten, der allgemeinen Formel

$$BR_aSiO_{\frac{3-a}{2}} \qquad (IX) \ ,$$

wobei R und a die oben dafür angegebene Bedeutung haben,

B ein Rest der allgemeinen Formel

$$-R^1 (-NR^7-R^1)_z-NR^2-C (=O)-O-R^3-OH \quad (X),$$

bedeutet, wobei $R^1$, $R^2$, $R^3$ und z die oben dafür angegebene Bedeutung haben und
$R^7$ $R^2$ oder einen Rest der Formel $-C(=O)-O-R^3-OH$ bedeutet, enthalten.

Die erfindungsgemäßen Urethangruppen aufweisenden Organosiliciumverbindungen (4) enthalten vorzugsweise 10 bis 500, bevorzugt 50 bis 500, besonders bevorzugt 100 bis 500 Siloxaneinheiten der allgemeinen Formel (IX) mit Rest B.

Bevorzugt werden Urethangruppen aufweisende Organosiliciumverbindungen (4) erhalten, die neben den Siloxaneinheiten der Formel (IX) auch Siloxaneinheiten aus der Kondensation mit $\alpha$-Silanen enthalten.

Gegenstand der Erfindung sind daher Urethangruppen aufweisende Organosiliciumverbindungen (4), die durchschnittlich mindestens fünf Siloxaneinheiten, der allgemeinen Formel

$$BR_aSiO_{\frac{3-a}{2}} \quad (IX) ,$$

wobei R, B und a die oben dafür angegebene Bedeutung haben, und mindestens eine Siloxaneinheit der allgemeinen Formel

$$WR_eSiO_{\frac{3-e}{2}} \quad (XI) ,$$

wobei R, W und e die oben dafür angegebene Bedeutung haben, enthalten.

Die erfindungsgemäßen Urethangruppen aufweisenden Organosiliciumverbindungen (4) enthalten vorzugsweise 2 bis 100, bevorzugt 5 bis 100, besonders bevorzugt 5 bis 50 Siloxaneinheiten der allgemeinen Formel (XI) mit Rest W.

Vorzugsweise enthalten die erfindungsgemäßen Organosiliciumverbindungen (4) neben den Siloxaneinheiten der Formel (IX) und (XI) auch Siloxaneinheiten der Formel

$$R_cSiO_{\frac{4-c}{2}} \quad (XII) ,$$

wobei R und c die oben dafür angegebene Bedeutung haben.

Bevorzugt sind Urethangruppen aufweisende Organosiliciumverbindungen (4) der allgemeinen Formel

$$QR_2SiO(SiR_2O)_m(SiRBO)_n(SiRWO)_oSiR_2Q \quad (XIII) ,$$

wobei Q gleich R, X oder ein Rest der Formel $-OR^4$ ist,
R, $R^4$, B, X und W die oben dafür angegebene Bedeutung haben,
m 0 oder eine ganze Zahl von 1 bis 1 000, bevorzugt von 10 bis 600 ist,
n eine ganze Zahl von 2 bis 1 000, bevorzugt von 10 bis 500, besonders bevorzugt 50 bis 500 ist und
o eine ganze Zahl von 1 bis 1000, bevorzugt von 5 bis 100 ist.

Im Rahmen dieser Erfindung soll Formel (XIII) so verstanden werden, dass m Einheiten $-(SiR_2O)-$ und n Einheiten -(SiRBO)- und o Einheiten -(SiRWO)- in beliebiger Weise, beispielsweise als Block oder statistisch, im Organopolysiloxanmolekül verteilt sein können. Die o Einheiten -(SiRWO)- sind vorzugsweise überwiegend durch Einheiten $-(SiR_2O)-$ und - (SiRBO)- voneinander separiert.

Es können aber auch weitgehend lineare Organopolysiloxane (4) erhalten werden, die neben den D-Einheiten SiRAO, $SiR_2O$ und SiRWO auch T-Einheiten $SiAO_{3/2}$ und/oder $SiRO_{3/2}$ und/oder $SiWO_{3/2}$ enthalten können.

Gegenstand der Erfindung sind weiterhin Emulsionen enthaltend

(i) erfindungsgemäße Urethangruppen aufweisende Organosiliciumverbindungen
(ii) Emulgatoren und
(iii) Wasser.

Die Herstellung der erfindungsgemäßen Emulsionen erfolgt durch intensives Mischen von den Komponenten

(i), (ii) und (iii). Technologien zur Herstellung von Emulsionen von Organopolysiloxanen sind bekannt. So kann das intensive Mischen in Rotor-Stator-Rührvorrichtungen, Kolloidmühlen oder in Hochdruckhomogenisatoren erfolgen.

Bei den erfindungsgemäßen Emulsionen wird Wasser, in Mengen von vorzugsweise 60 bis 400 Gew.-teile, besonders bevorzugt 80 bis 300 Gew.-teile, jeweils bezogen auf 100 Gew.-teile (i) Urethangruppen aufweisende Organosiliciumverbindungen, eingesetzt.

Als (ii) Emulgatoren können alle bisher bekannten, ionischen und nicht-ionischen Emulgatoren sowohl einzeln als auch als Mischungen verschiedener Emulgatoren eingesetzt werden, mit denen auch bisher wässrige Emulsionen von Organopolysiloxanen hergestellt werden konnten.

Beispiele für anionische Emulgatoren sind:

1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 40 Ethylenoxid (EO)- bzw. Propylenoxid(PO)einheiten.

2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; gegebenenfalls können diese Alkohole oder Alkylphenole auch mit 1 bis 40 EO-Einheiten ethoxyliert sein.

3. Alkali- und Ammoniumsalze von Carbonsäuren mit 8 bis 20 C-Atomen im Alkyl-, Aryl-, Alkaryl- oder Aralkylrest.

4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.

Beispiele für nichtionische Emulgatoren sind:

5. Polyvinylalkohol, der noch 5 bis 50 %, vorzugsweise 8 bis 20 % Vinylacetateinheiten aufweist, mit einem Polymerisationsgrad von 500 bis 3000.

6. Alkylpolyglycolether, vorzugsweise solche mit 8 bis 40 EO-Einheiten und Alkylresten von 8 bis 20 C-Atomen.

7. Alkylarylpolyglycolether, vorzugsweise solche mit 8 bis 40 EO-Einheiten und 8 bis 20 C-Atomen in den Alkyl- und Arylresten.

8. Ethylenoxid/Propylenoxid(EO/PO)-Blockcopolymere, vorzugsweise solche mit 8 bis 40 EO- bzw. PO-Einheiten.

9. Additionsprodukte von Alkylaminen mit Alkylresten von 8 bis 22 C-Atomen mit Ethylenoxid oder Propylenoxid.

10. Fettsäuren mit 6 bis 24 C-Atomen.

11. Alkylpolyglykoside der allgemeinen Formel $R^*\text{-}O\text{-}Z_O$, worin R* einen linearen oder verzweigten, gesättigten oder ungesättigten Alkylrest mit im Mittel 8 - 24 C-Atomen und $Z_O$ einen Oligoglykosidrest mit im Mittel o = 1 - 10 Hexose- oder Pentoseeinheiten oder Gemischen davon bedeuten.

12. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.

13. Polare Gruppen enthaltende lineare Organo(poly)siloxane, insbesondere solche mit Alkoxygruppen mit bis zu 24 C-Atomen und/oder bis zu 40 EO- und/oder PO-Gruppen.

Beispiele für kationische Emulgatoren sind:

14. Salze von primären, sekundären und tertiären Fettaminen mit 8 bis 24 C-Atomen mit Essigsäure, Schwefelsäure, Salzsäure und Phosphorsäuren.

15. Quarternäre Alkyl- und Alkylbenzolammoniumsalze, insbesondere solche, deren Alkylgruppen 6 bis 24 C-Atome besitzen, insbesondere die Halogenide, Sulfate, Phosphate und Acetate.

16. Alkylpyridinium-, Alkylimidazolinium- und Alkyloxazoliniumsalze, insbesondere solche, deren Alkylkette bis zu

18 C-Atome besitzt, speziell die Halogenide, Sulfate, Phosphate und Acetate.

Als Ampholytische Emulgatoren eignen sich besonders:

17. Langkettig substituierte Aminosäuren, wie N-Alkyl-di-(aminoethyl-)glycin oder N-Alkyl-2-aminopropionsäuresalze.

18. Betaine, wie N-(3-Acylamidopropyl)-N,N-dimethylammoniumsalze mit einem $C_8$-$C_{18}$-Acylrest und Alkyl-imidazolium-Betaine.

Bevorzugt als Emulgatoren sind nichtionische Emulgatoren, insbesondere die vorstehend unter 6. aufgeführten Alkylpolyglycolether.
Die (ii) Emulgatoren werden in Mengen von vorzugsweise 5 bis 50 Gew.-teile, besonders bevorzugt 10 bis 30 Gew.-teile, jeweils bezogen auf 100 Gew.-teile (i) Urethangruppen aufweisende Organosiliciumverbindungen, eingesetzt.

Beispiel 1:

200 g eines Copolymerisats bestehend aus Aminopropylmethylsiloxan- und Dimethylsiloxaneinheiten mit einer Aminogruppenkonzentration von 0,14 mεqu./g, einem Molekulargewicht von $M_n$=32 000 und ausschließlich Hydroxyendgruppen werden in 150 g Toluol und 50 g Isopropanol gelöst. Die Lösung enthält somit 28 mεqu. prim. Aminogruppen und 12,5 mεqu. Siloxanolgruppen. Man gibt zu dieser Lösung 2,50 g Ethylencarbonat, homogenisiert unter Rühren und erwärmt auf 50°C, worauf die Viskosität der Lösung zunimmt.
Nach 3 Stunden ergibt die Titration auf freies Amin eine Basenkonzentration von weniger als 0,001 mεqu./g Lösung, die prim. Amingruppen sind damit praktisch quantitativ zu Urethangruppen umgesetzt.
201,2 g der erhaltenen Lösung werden bei 25°C mit 0,80 g Cyclohexylaminomethyl-methyldiethoxysilan versetzt, homogenisiert und ohne Erwärmen 24 Stunden leicht gerührt. Man erhält eine hochviskose Siloxanpolymerlösung, die nach dem Eintrocken ein nicht mehr fließendes Siloxanpolymer liefert. Das erhaltene Polymer enthält durchschnittlich 54 Siloxaneinheiten mit Urethangruppen und 11 Siloxaneinheiten mit Cyclohexylaminomethylgruppen und das Molekulargewicht $M_n$ beträgt ca. 350 000.

Beispiel 2:

200 g eines Copolymerisats bestehend aus Aminopropylmethylsiloxan- und Dimethylsiloxaneinheiten mit einer Konzentration von 0,64 mεqu.-$NH_2$/g und 1090 Gew.-ppm OH als Silanol und einem Molekulargewicht von $M_n$= 31 000 werden in einem Lösemittelgemisch aus je 100 g Toluol und Isopropanol gelöst. Zu dieser Lösung gibt man 13,2 g Propylencarbonat und lässt 5 Stunden bei 60°C unter Rühren ausreagieren. Eine Probe der viskosen Lösung zeigt einen Amingehalt von 0,002 mεqu./g, was einem Umsatz von über 99 % entspricht.
Danach werden 206,6 g der Lösung und 0,75 g Morpholinomethylmethyl-diethoxysilan durch intensives Rühren bei 25°C homogenisiert, worauf sich die Viskosität der Lösung stark erhöht. Eine eingetrocknete Probe ergibt ein klares Festpolymer, das mit der zehnfachen Menge Toluol und Isopropanol erst anquillt und nach 10 Tagen wieder eine klare Lösung ergibt.
Das erhaltene Polymer enthält durchschnittlich 310 Siloxaneinheiten mit Urethangruppen und 15 Siloxaneinheiten mit Morpholinomethylgruppen und das Molekulargewicht $M_n$ beträgt ca. 490 000.

## Patentansprüche

1. Verfahren zur Herstellung von Urethangruppen aufweisenden Organosiliciumverbindungen, indem
in einer 1. Stufe
aminofunktionelle Organosiliciumverbindungen (1), die pro Molekül mindestens eine Siloxaneinheit der allgemeinen Formel

$$AR_aSiO_{\frac{3-a}{2}} \qquad (I)$$

und pro Molekül mindestens zwei Siloxaneinheiten der allgemeinen Formel

$$XR_bSiO_{\frac{3-b}{2}} \qquad (II)$$

enthalten, wobei

R gleich oder verschieden ist und einen einwertigen, gegebenenfalls substituierten Kohlenwasserstoffrest mit 1 bis 18 Kohlenstoffatomen, vorzugsweise einen einwertigen Kohlenwasserstoffrest mit 1 bis 18 Kohlenstoffatomen bedeutet,
A einen Rest der allgemeinen Formel

$$-R^1(-NR^2-R^1)_z-NR^2-H \qquad (III),$$

bedeutet, wobei

$R^1$ einen zweiwertigen organischen Rest mit 1 bis 18 Kohlenstoffatomen, vorzugsweise einen zweiwertigen Kohlenwasserstoffrest mit 1 bis 18 Kohlenstoffatomen bedeutet,
$R^2$ ein Wasserstoffatom oder einen Kohlenwasserstoffrest mit 1 bis 18 Kohlenstoffatomen, vorzugsweise ein Wasserstoffatom bedeutet,
X eine kondensationsfähige Gruppe bedeutet,
a 0 oder 1, vorzugsweise 1 ist,
b 1 oder 2, vorzugsweise 2 ist,
z 0 oder eine ganze Zahl von 1 bis 10, vorzugsweise 0, 1 oder 2 ist,

mit organischen Carbonaten (2), die eine Gruppe der allgemeinen Formel

$$-O-C(=O)O- \quad (IV)$$

enthalten, umgesetzt werden und
in einer 2. Stufe
die in der 1. Stufe erhaltenen kondensationsfähige Gruppen aufweisenden Umsetzungsprodukte aus (1) und (2) gegebenenfalls mit Silanen (3), die kondensationsfähige Gruppen aufweisen,
zu höhermolekularen, Urethangruppen aufweisenden Organosiliciumverbindungen kondensiert werden.

2. Verfahren nach Anspruch 1, **dadurch gekennzeichnet, dass** $R^2$ ein Wasserstoffatom ist.

3. Verfahren nach Anspruch 1 oder 2, **dadurch gekennzeichnet, dass** A ein Aminopropylrest ist.

4. Verfahren nach Anspruch 1, 2 oder 3, **dadurch gekennzeichnet, dass** X eine Hydroxygruppe ist.

5. Verfahren nach einem der Ansprüche 1 bis 4, **dadurch gekennzeichnet, dass** als Organosiliciumverbindungen (1) Organopolysiloxane der allgemeinen Formel

$$XR_2SiO(SiR_2O)_1(SiRAO)_kSiR_2X \qquad (VI),$$

wobei A, R und X die in Anspruch 1 dafür angegebene Bedeutung haben,
1 0 oder eine ganze Zahl von 1 bis 1 000, und
k eine ganze Zahl von 5 bis 1 000, ist,

eingesetzt werden.

6. Verfahren nach einem der Ansprüche 1 bis 5, **dadurch gekennzeichnet, dass** als Carbonate (2) Cyclocarbonate der allgemeinen Formel

$$O\text{-}R^3\text{-}O\text{-}C{=}O \quad (VII),$$

wobei $R^3$ einen zweiwertigen Kohlenwasserstoffrest mit 1 bis 12 Kohlenstoffatomen, der gegebenenfalls durch mindestens eine Hydroxylgruppe substituiert ist, eingesetzt werden.

**7.** Verfahren nach einem der Ansprüche 1 bis 6, **dadurch gekennzeichnet, dass** als Carbonate (2) die Cyclocarbonate Ethylencarbonat und Propylencarbonat eingesetzt werden.

**8.** Verfahren nach einem der Ansprüche 1 bis 7, **dadurch gekennzeichnet, dass** als Silane (3) α-Silane der allgemeinen Formel

$$WR_eSi(OR^4)_{3-e} \quad (VIII),$$

wobei W einen einwertigen Reste der Formel $-CH_2$-Y bedeutet, Y ein monofunktioneller Rest aus der Gruppe der Halogene, der monosubstituierten Atome O und S und der substituierten Atome N und P bedeutet,
R die oben dafür angegebene Bedeutung hat,
$R^4$ einen Alkylrest mit 1 bis 8 Kohlenstoffatomen je Rest bedeutet,
e 0 oder 1 ist,

eingesetzt werden.

**9.** Verfahren nach Anspruch 8, **dadurch gekennzeichnet, dass** W ein Rest der Formel

$$-CH_2NHR^5,\ -CH_2NR^5_2 \text{ oder } -CH_2RN^6$$

ist, wobei $R^5$ einen einwertigen, gegebenenfalls N- und/oder O-Atome enthaltenden Kohlenwasserstoffrest mit 1 bis 18 Kohlenstoffatomen und $R^6$ einen zweiwertigen gegebenenfalls N- und/oder O-Atome enthaltenden Kohlenwasserstoffrest mit 3 bis 12 Kohlenstoffatomen bedeuten.

**10.** Verfahren nach Anspruch 8 oder 9, **dadurch gekennzeichnet, dass** W ein Cyclohexylaminomethyl- oder Morpholinomethylrest ist.

**11.** Urethangruppen aufweisende Organosiliciumverbindungen (4), die durchschnittlich mindestens fünf Siloxaneinheiten der allgemeinen Formel

$$BR_aSiO_{\frac{3-a}{2}} \quad (IX),$$

und durchschnittlich mindestens eine Siloxaneinheit der allgemeinen Formel

$$WR_eSiO_{\frac{3-e}{2}} \quad (XI),$$

enthalten, wobei

B ein Rest der allgemeinen Formel

$$-R^1(-NR^7-R^1)_z-NR^2-C(=O)-O-R^3-OH \quad (X),$$

bedeutet,
R, $R^1$, $R^2$, $R^3$, a und z die im Anspruch 1 dafür angegebene Bedeutung haben,
$R^7$ $R^2$ oder einen Rest der Formel $-C(=O)-O-R^3-OH$ bedeutet und W und e die im Anspruch 8 dafür angegebene Bedeutung haben.

**12.** Urethangruppen aufweisende Organosiliciumverbindungen (4) nach Anspruch 11, **dadurch gekennzeichnet, dass** sie ein Molekulargewicht $M_n$ aufweisen, das mindestens 5 Mal so groß ist, wie das Molekulargewicht $M_n$ der eingesetzten Organosiliciumverbindungen (1) gemäß Anspruch 1.

**13.** Urethangruppen aufweisende Organosiliciumverbindungen (4) nach Anspruch 11 oder 12, **dadurch gekennzeichnet, dass** sie ein Molekulargewicht $M_n$ von 10 000 bis 1 000 000 aufweisen.

**14.** Urethangruppen aufweisende Organosiliciumverbindungen (4) nach Anspruch 11, 12 oder 13, **dadurch gekennzeichnet, dass** $R^2$ ein Wasserstoffatom ist.

**15.** Urethangruppen aufweisende Organosiliciumverbindungen (4) nach einem der Ansprüche 11 bis 14, **dadurch gekennzeichnet, dass** $R^3$ ein Ethylen- oder Propylenrest ist.

**16.** Urethangruppen aufweisende Organosiliciumverbindungen (4) nach einem der Ansprüche 11 bis 15, **dadurch gekennzeichnet, dass** W ein Rest der Formel

$$-CH_2NHR^5,\ -CH_2NR^5_2 \text{ oder } -CH_2RN^6$$

ist, wobei $R^5$ einen einwertigen, gegebenenfalls N- und/oder O-Atome enthaltenden Kohlenwasserstoffrest mit 1 bis 18 Kohlenstoffatomen und $R^6$ einen zweiwertigen gegebenenfalls N- und/oder O-Atome enthaltenden Kohlenwasserstoffrest mit 3 bis 12 Kohlenstoffatomen bedeuten.

**17.** Urethangruppen aufweisende Organosiliciumverbindungen (4) nach einem der Ansprüche 11 bis 16, **dadurch gekennzeichnet, dass** es Organopolysiloxane der allgemeinen Formel

$$QR_2SiO(SiR_2O)_m(SiRBO)_n(SiRWO)_oSiR_2Q \qquad (XIII)$$

sind, wobei Q gleich R, X oder ein Rest der Formel $-OR^4$ ist, R, B und W die in Anspruch 11 dafür angegebene Bedeutung,
X die in Anspruch 1 und $R^4$ die in Anspruch 8 dafür angegebene Bedeutung haben,
m 0 oder eine ganze Zahl von 1 bis 1000,
n eine ganze Zahl von 2 bis 1000 und
o eine ganze Zahl von 1 bis 1000 ist.

**18.** Emulsionen enthaltend

(i) Urethangruppen aufweisende Organosiliciumverbindungen nach einem der Ansprüche 11 bis 17,
(ii) Emulgatoren und
(iii) Wasser.

## Claims

**1.** Process for the preparation of organosilicon compounds having urethane groups, in which, in a 1st stage, aminofunctional organosilicon compounds (1) which contain at least one siloxane unit of the general formula

$$AR_aSiO_{\frac{3-a}{2}} \qquad (I)$$

per molecule and at least two siloxane units of the general formula

$$XR_bSiO_{\frac{3-b}{2}} \qquad (II)$$

per molecule, in which

R is identical or different and is a monovalent, optionally substituted hydrocarbon radical having 1 to 18 carbon atoms, preferably a monovalent hydrocarbon radical having 1 to 18 carbon atoms,
A is a radical of the general formula

$$-R^1(-NR^2-R^1)_z-NR^2-H \qquad (III),$$

in which

$R^1$ is a divalent organic radical having 1 to 18 carbon atoms, preferably a divalent hydrocarbon radical having 1 to 18 carbon atoms,
$R^2$ is a hydrogen atom or a hydrocarbon radical having 1 to 18 carbon atoms, preferably a hydrogen atom,
X is a group capable of condensation,
a is 0 or 1, preferably 1,
b is 1 or 2, preferably 2,
z is 0 or an integer from 1 to 10, preferably 0, 1 or 2,

are reacted with organic carbonates (2) which contain a group of the general formula

$$-O-C(=O)O- \qquad (IV)$$

and,
in a 2nd stage,
the reaction products of (1) and (2) which are obtained in the 1st stage and have groups capable of condensation are optionally condensed with silanes (3), which have groups capable of condensation,
to give higher molecular weight organosilicon compounds having urethane groups.

2. Process according to claim 1, **characterized in that** $R^2$ is a hydrogen atom.

3. Process according to claim 1 or 2, **characterized in that** A is an aminopropyl radical.

4. Process according to claim 1, 2 or 3, **characterized in that** X is a hydroxyl group.

5. Process according to any of claims 1 to 4, **characterized in that** organosilicon compounds (1) used are organopolysiloxanes of the general formula

$$XR_2SiO(SiR_2O)_1(SiRAO)_kSiR_2X \qquad (VI),$$

in which A, R and X have the meaning stated therefor in claim 1,
l is 0 or an integer of from 1 to 1000, and
k is an integer from 5 to 1000.

6. Process according to any of claims 1 to 5, **characterized in that** carbonates (2) used are cyclocarbonates of the general formula

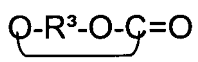

(VII),

in which $R^3$ is a divalent hydrocarbon radical having 1 to 12 carbon atoms which is optionally substituted by at least one hydroxyl group.

**7.** Process according to any of claims 1 to 6, **characterized in that** carbonates (2) used are the cyclocarbonates ethylene carbonate and propylene carbonate.

**8.** Process according to any of claims 1 to 7, **characterized in that** silanes (3) used are $\alpha$-silanes of the general formula

$$WR_eSi(OR^4)_{3-e} \quad (VIII),$$

in which W is a monovalent radical of the formula - $CH_2$-Y,
Y is a monofunctional radical from the group consisting of the halogens, the monosubstituted atoms O and S and the substituted atoms N and P,
R has the meaning stated above therefor,
$R^4$ is an alkyl radical having 1 to 8 carbon atoms per radical,
e is 0 or 1.

**9.** Process according to claim 8, **characterized in that** W is a radical of the formula

$$-CH_2NHR^5,\ -CH_2NR^5_2 \text{ or } -CH_2RN^6$$

in which $R^5$ is a monovalent hydrocarbon radical optionally containing N and/or O atoms and having 1 to 18 carbon atoms and $R^6$ is a divalent hydrocarbon radical optionally containing N and/or O atoms and having 3 to 12 carbon atoms.

**10.** Process according to claim 8 or 9, **characterized in that** W is a cyclohexylaminomethyl or morpholinomethyl radical.

**11.** Organosilicon compounds (4) which have urethane groups and contain on average at least five siloxane units of the general formula

$$BR_aSiO_{\frac{3-a}{2}} \quad (IX),$$

and on average at least one siloxane unit of the general formula

$$WR_eSiO_{\frac{3-e}{2}} \quad (XI),$$

in which

B is a radical of the general formula

$$-R^1(-NR^7-R^1)_z-NR^2-C(=O)-O-R^3-OH \quad (X),$$

R, $R^1$, $R^2$, $R^3$, a and z have the meaning stated therefor in claim 1,
$R^7$ is $R^2$ or a radical of the formula -C(=O)-O-$R^3$-OH
and W and e have the meaning stated therefor in claim 8.

**12.** Organosilicon compounds (4) having urethane groups, according to claim 11, **characterized in that** they have a molecular weight $M_n$ which is at least 5 times as great as the molecular weight $M_n$ of the organosilicon compounds (1) used, according to claim 1.

**13.** Organosilicon compounds (4) having urethane groups, according to claim 11 or 12, **characterized in that** they have a molecular weight $M_n$ of from 10 000 to 1 000 000.

**14.** Organosilicon compounds (4) having urethane groups, according to claim 11, 12 or 13, **characterized in that** $R^2$ is a hydrogen atom.

**15.** Organosilicon compounds (4) having urethane groups, according to any of claims 11 to 14, **characterized in that** $R^3$ is an ethylene or propylene radical.

**16.** Organosilicon compounds (4) having urethane groups, according to any of claims 11 to 15, **characterized in that** W is a radical of the formula

$$-CH^2NHR^5, -CH_2NR^5_2 \text{ or } -CH_2RN^6$$

in which $R^5$ is a monovalent hydrocarbon radical optionally containing N and/or O atoms and having 1 to 18 carbon atoms and $R^6$ is a divalent hydrocarbon radical optionally containing N and/or O atoms and having 3 to 12 carbon atoms.

**17.** Organosilicon compounds (4) having urethane groups, according to any of claims 11 to 16, **characterized in that** they are organopolysiloxanes of the general formula

$$QR_2SiO(SiR_2O)_m(SiRBO)_n(SiRWO)_oSiR_2Q \qquad (XIII)$$

in which Q is R, X or a radical of the formula $-OR^4$, R, B and W have the meaning stated therefor in claim 11, X has the meaning stated therefor in claim 1 and $R^4$ has the meaning stated therefor in claim 8,
m is 0 or an integer from 1 to 1000,
n is an integer from 2 to 1000 and
o is an integer from 1 to 1000.

**18.** Emulsions containing

(i) organosilicon compounds having urethane groups, according to any of claims 11 to 17,
(ii) emulsifiers and
(iii) water.

**Revendications**

**1.** Procédé pour la préparation de composés organosiliciés comportant des groupes uréthanne, par dans une 1re étape,
mise en réaction de composés organosiliciés (1) à fonction amino, qui contiennent par molécule au moins une unité siloxane de formule générale

$$AR_aSiO_{\frac{3-a}{2}} \qquad (I)$$

et par molécule au moins deux unités siloxane de formule générale

$$XR_bSiO_{\frac{3-b}{2}} \qquad (II)$$

R étant identique ou différent et représentant un radical hydrocarboné monovalent éventuellement substitué, ayant de 1 à 18 atomes de carbone, de préférence un radical hydrocarboné monovalent ayant de 1 à 18 atomes

de carbone,
A représentant un radical de formule générale

$$-R^1(-NR^2-R^1)_z-NR^2-H \qquad \text{(III)},$$

$R^1$ représentant un radical organique divalent ayant de 1 à 18 atomes de carbone, de préférence un radical hydrocarboné divalent ayant de 1 à 18 atomes de carbone,
$R^2$ représentant un atome d'hydrogène ou un radical hydrocarboné ayant de 1 à 18 atomes de carbone, de préférence un atome d'hydrogène,
X représentant un groupe condensable,
a étant 0 ou 1, de préférence 1,
b étant 1 ou 2, de préférence 2,
z étant 0 ou un nombre entier allant de 1 à 10, de préférence 0, 1 ou 2,

avec des carbonates organiques (2) qui contiennent un groupe de formule générale

$$-O-C(=O)O- \qquad \text{(IV)}$$

et
dans une 2e étape,
condensation des produits de réaction de (1) et (2), comportant des groupes condensables, obtenus dans la 1re étape, éventuellement avec des silanes (3) qui comportent des groupes condensables,
pour l'obtention de composés organosiliciés de masse moléculaire élevée, comportant des groupes uréthanne.

2. Procédé selon la revendication 1, **caractérisé en ce que** $R^2$ est un atome d'hydrogène.

3. Procédé selon la revendication 1 ou 2, **caractérisé en ce que** A est un radical aminopropyle.

4. Procédé selon la revendication 1, 2 ou 3, **caractérisé en ce que** X est un groupe hydroxy.

5. Procédé selon l'une quelconque des revendications 1 à 4, **caractérisé en ce qu'**on utilise en tant que composés organosiliciés (1) des organopolysiloxanes de formule générale

$$XR_2SiO(SiR_2O)_1(SiRAO)_kSiR_2X \qquad \text{(VI)}$$

dans laquelle A, R et X ont les significations données pour ces symboles dans la revendication 1,
l est 0 ou un nombre entier allant de 1 à 1 000, et
k est un nombre entier allant de 5 à 1 000.

6. Procédé selon l'une quelconque des revendications 1 à 5, **caractérisé en ce qu'**on utilise en tant que carbonates (2) des carbonates cycliques de formule générale

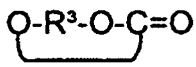
(VII),

dans laquelle $R^3$ est un radical hydrocarboné ayant de 1 à 12 atomes de carbone, qui est éventuellement substitué par au moins un groupe hydroxy.

7. Procédé selon l'une quelconque des revendications 1 à 6, **caractérisé en ce qu'**on utilise en tant que carbonates (2) les carbonates cycliques carbonate d'éthylène et carbonate de propylène.

8. Procédé selon l'une quelconque des revendications 1 à 7, **caractérisé en ce qu'**on utilise en tant que silanes (3) des $\alpha$-silanes de formule générale

$$WR_eSi(OR^4)_{3-e} \qquad \text{(VIII)},$$

dans laquelle W représente un radical monovalent de formule $-CH_2-Y$,

Y représente un radical monofonctionnel choisi dans l'ensemble constitué par les halogènes, les atomes O et S monosubstitués et les atomes N et P substitués,
R a la signification donnée plus haut pour ce symbole,
$R^4$ représente un radical alkyle ayant de 1 à 8 atomes de carbone par radical,
e est 0 ou 1.

**9.** Procédé selon la revendication 8, **caractérisé en ce que**

W est un radical de formule

$$-CH_2NHR^5,\ -CH_2NR^5_2 \text{ ou } -CH_2RN^6$$

$R^5$ représentant un radical hydrocarboné monovalent ayant de 1 à 18 atomes de carbone, contenant éventuellement des atomes d'azote et/ou d'oxygène, et $R^6$ représentant un radical hydrocarboné divalent ayant de 3 à 12 atomes de carbone, contenant éventuellement des atomes d'azote et/ou d'oxygène.

**10.** Procédé selon la revendication 8 ou 9, **caractérisé en ce que** W est un radical cyclohexylaminométhyle ou morpholinométhyle.

**11.** Composés organosiliciés (4) comportant des groupes uréthanne, qui contiennent en moyenne au moins cinq unités siloxane de formule générale

$$BR_aSiO_{\frac{3-a}{2}} \qquad (IX)$$

et en moyenne au moins une unité siloxane de formule générale

$$WR_eSiO_{\frac{3-e}{2}} \qquad (XI)$$

B représentant un radical de formule générale

$$-R^1(-NR^7-R^1)_2-NR^2-C(=O)-O-R^3-OH \qquad (XI),$$

R, $R^1$, $R^2$, $R^3$, a et z ayant les significations données pour ces symboles dans la revendication 1,
$R^7$ représentant $R^2$ ou un radical de formule $-C(=O)-O-R^3-OH$ et
W et e ayant les significations sonnées pour ces symboles dans la revendication 8.

**12.** Composés organosiliciés (4) comportant des groupes uréthanne, selon la revendication 11, **caractérisés en ce qu'**ils ont une masse moléculaire $M_n$ qui est au moins 5 fois plus élevée que la masse moléculaire $M_n$ des composés organosiliciés (1) selon la revendication 1 qui sont utilisés.

**13.** Composés organosiliciés (4) comportant des groupes uréthanne, selon la revendication 11 ou 12, **caractérisés en ce qu'**ils ont une masse moléculaire $M_n$ de 10 000 à 1 000 000.

**14.** Composés organosiliciés (4) comportant des groupes uréthanne, selon la revendication 11, 12 ou 13, **caractérisés en ce que** $R^2$ est un atome d'hydrogène.

**15.** Composés organosiliciés (4) comportant des groupes uréthanne, selon l'une quelconque des revendications 11 à 14, **caractérisés en ce que** $R^3$ est un radical éthylène ou propylène.

**16.** Composés organosiliciés (4) comportant des groupes uréthanne, selon l'une quelconque des revendications 11 à 15, **caractérisés en ce que** W est un radical de formule

$-CH_2NHR^5$, $-CH_2NR^5_2$ ou $-CH_2RN^6$

$R^5$ représentant un radical hydrocarboné monovalent ayant de 1 à 18 atomes de carbone, contenant éventuellement des atomes d'azote et/ou d'oxygène, et $R^6$ représentant un radical hydrocarboné divalent ayant de 3 à 12 atomes de carbone, contenant éventuellement des atomes d'azote et/ou d'oxygène.

**17.** Composés organosiliciés (4) comportant des groupes uréthanne, selon l'une quelconque des revendications 11 à 16, **caractérisés en ce qu'**ils sont des organopolysiloxanes de formule générale

$$QR_2SiO(SiR_2O)_m(SiRBO)_n(SiRWO)_oSiR_2Q \qquad (XIII)$$

dans laquelle Q a la même signification que R, X ou est un radical de formule $-OR^4$,
R, B et W ont les significations données pour ces symboles dans la revendication 11,
X a la signification donnée dans la revendication 1 et $R^4$ a la signification donnée pour ce symbole dans la revendication 8,
m est 0 ou un nombre entier allant de 1 à 1 000,
n est un nombre entier allant de 2 à 1 000 et
o est un nombre entier allant de 1 à 1 000.

**18.** Emulsions contenant

(i) des composés organosiliciés comportant des groupes uréthanne selon l'une quelconque des revendications 11 à 17,
(ii) des émulsifiants et
(iii) de l'eau.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5001210 A
- US 6379751 A
- US 5174813 A
- US 5389364 A
- US 5686547 A